# EUROPEAN PATENT APPLICATION

(11) **EP 0 927 996 A2**
(43) Date of publication of application: **07.07.1999**
(21) Application number: 98310798.8
(22) Date of filing: 30.12.1998
(51) Int. Cl.: G11B 17/04

(54) **Optical disk drive capable of playing card type optical disk**

(30) Priority: 31.12.1997 KR 9780848
(71) Applicant: SAMSUNG ELECTRONICS CO., LTD., Suwon-City, Kyungki-do (KR)
(72) Inventor: Lee, Ki-Joo, Suwon-shi, Kyonggi-do (KR)
(74) Representative: Chugg, David John

(57) **Abstract**

An optical disk drive capable of playing an card type optical disk (120). The optical disk drive includes an optical pickup for reading information recorded on an optical disk, moving in a horizontal direction along a moving axis (Y), and a tray (100) having first and second supporting surfaces (E,F) for supporting circular optical disks having first and second diameters, respectively, and a third supporting surface (G) for supporting a card type optical disk (120), formed at either side of the tray, centering on the moving axis of the optical pickup. The card type optical disk (120) has a horizontal length (W) determined such that the card type optical disk (120) can be mounted on the third supporting surface (G), a vertical length (L) equal to a distance (C) where the optical pickup picks up data from the first circular optical disk having the first diameter greater than the second diameter, moving along the moving axis (Y), and a data recording surface with a predetermined width (D), formed centering on a central axis of the card type optical disk (120).

## Description

The present invention relates to an optical disk drive, and in particular, to an optical disk drive capable of reading data written on a card type optical disk.

An optical disk drive such as a CD-ROM (Compact Disk-Read Only Memory) drive and a DVD-ROM (Digital Versatile Disk-ROM) drive is widely used for an auxiliary storage of a computer system. Such an optical disk drive generally includes a tray for loading thereinto an optical disk which is a recording medium.

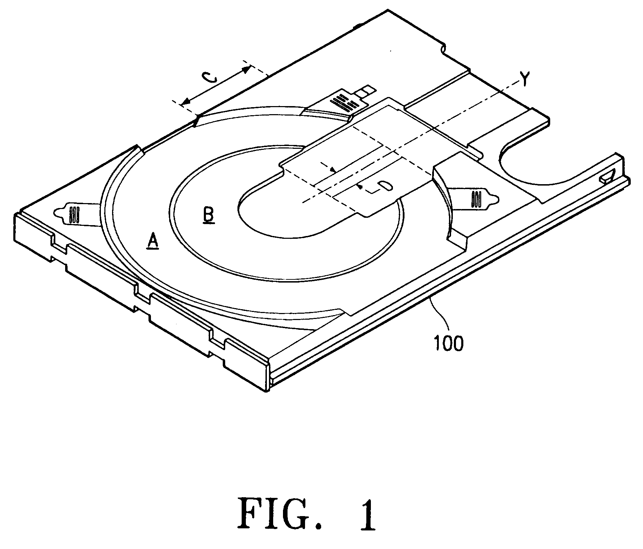

Figure 1 illustrates a tray of a common CD-ROM drive. Referring to Figure 1, a tray 100 of a common optical disk drive has an upper surface designed such that optical disks having diameters of 8cm and 12cm can be mounted thereon. That is, the optical disk having the diameter of 12cm is mounted on a supporting surface A of the tray 100 and the optical disk having the diameter of 8cm is mounted on a supporting surface B of the tray 100. The optical disks put on the supporting surfaces A and B of the tray 100 are rotated by a spindle motor, and the data written on the surface of the optical disks is read by an optical pickup which is horizontally driven along a moving axis Y.

Since the conventional optical disk drive has the tray designed such that only the circular optical disks can be mounted thereon, it is inconvenient for the user to carry the circular optical disks of great bulk and take them in custody. Further, it is uneconomical to record only a small amount of data in a recordable optical disk such as a CD-R (CD-Recordable) or CD-R/W (CD-Rewritable) having a high recording capacity.

It is therefore an aim of embodiments of the present invention to provide an optical disk drive capable of playing an card type optical disk.

According to a first aspect of the invention, there is provided an optical disk drive capable of playing a card type optical disk, the disk drive comprising: an optical pickup for reading information recorded on an optical disk, by travelling along a reading axis; and a tray having at least a first supporting surface for supporting circular optical disks of a first type and diameter, and a further supporting surface for supporting a card type optical disk, the further supporting surface being formed such that a data recording surface of such a card type optical disk placed thereon has that data recording surface centered on the reading axis of the optical pickup.

The tray is preferably further capable of receiving circular optical disks of a second type diameter, different to and less than the first diameter.

Preferably, the further supporting surface is dimensioned to receive a card type optical disk having a width, a length equal to a distance by which the optical pickup is able to travel to pick up data from the first type of circular optical disk having the first diameter greater than the second diameter by travelling along the reading axis, and the further supporting surface is aligned on the tray such that a card type optical disk mounted thereon has a data recording surface with a predetermined width which has a centre line arranged to be aligned, in use, with the reading axis of the pick-up.

The data recording surface of the card type optical disk is preferably centred along a central axis of the card type disk.

Said further supporting surface is preferably offset to one side of the first supporting surface such that the recording surface of a card type optical disk supported thereon, extends substantially no further than a travelling length of the optical pickup.

The length of the data recording surface of a card type optical disk preferably corresponds to the maximum distance by which the optical pick-up is able to travel along said reading axis during a reading or recording operation.

According to a second aspect of the present invention, there is provided an optical disk drive capable of playing a card type optical disk including an optical pickup for reading information recorded on an optical disk, moving in a horizontal direction along a moving axis; a tray having first and second supporting surfaces for supporting circular optical disks having first and second diameters, respectively, and a third supporting surface for supporting a card type optical disk, formed at either side of the tray, centering on the moving axis of the optical pickup; and said card type optical disk having a horizontal length determined such that the card type optical disk can be mounted on the third supporting surface, a vertical length equal to a distance where the optical pickup picks up data from the first circular optical disk having the first diameter greater than the second diameter moving along the moving axis, and a data recording surface with a predetermined width, formed centering on a central axis of the card type optical disk.

For a better understanding of the invention, and to show how embodiments of the same may be carried into effect, reference will now be made, by way of example, to the accompanying diagrammatic drawings, in which:
Figure 1 is a perspective view of a tray of a common CD-ROM drive;
Figure 2 is a plane view of a tray on which a card type optical disk can be mounted, according to an embodiment of the present invention;
Figure 3 is a diagram illustrating a data recording surface of the card type optical disk according to an embodiment of the present invention; and
Figure 4 is a perspective view for explaining how the card type optical disk is mounted on the tray according to an embodiment of the present invention.

Reference will now be made in detail to a preferred embodiment of the present invention. In the following description, specific details such as a CD-ROM drive and a data recording width of a card type optical disk have been set forth to provide a more through understanding. It will be apparent, however, to one skilled in the art that the present invention may not be limited to these specific details. A description of known functions and constructions necessarily obscuring the subject matter of the present invention have been omitted in the present invention for clarity.

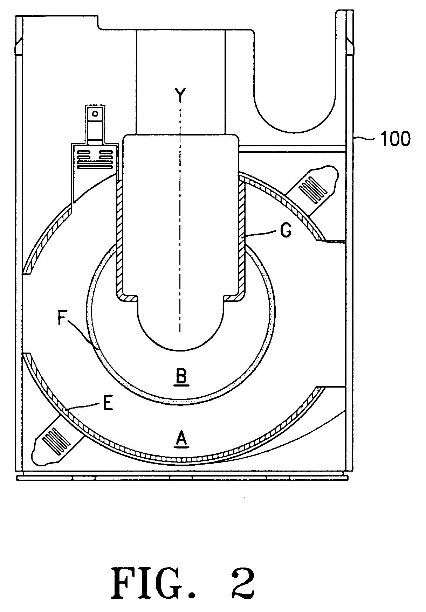

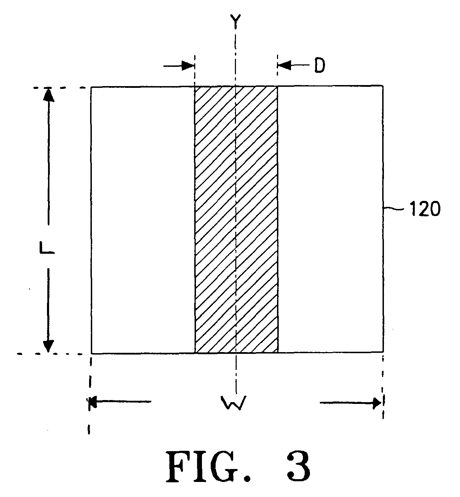

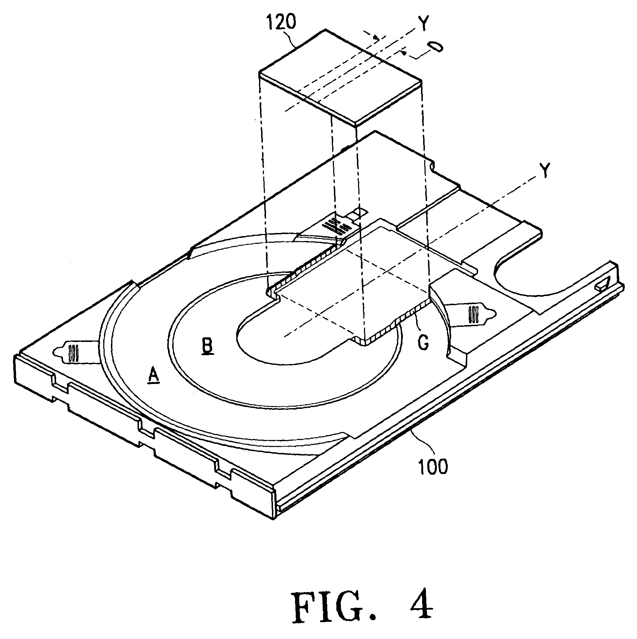

Figure 2 illustrates a tray 100 on which a card type optical disk can be mounted according to an embodiment of the present invention. Figure 3 illustrates a data recording surface of the card type optical disk 120 according to an embodiment of the present invention. Figure 4 shows how a card type optical disk 120 is mounted on the tray 100 according to an embodiment of the present invention.

Referring to Figure 2, the tray 100 has a supporting surface E, formed at an outermost circumference, for supporting a circular optical disk having a diameter of 12cm, and a supporting surface F, formed at inner circumference, for supporting a circular optical disk having a diameter of 8cm. In addition, the tray 100 has a supporting surface G for supporting a card type optical disk 120. Here, as illustrated, the supporting surface G is formed on either side of the tray 100, centered on a moving axis Y of an optical pickup (not shown), so that it is possible to read data recorded on the card type optical disk even without modifying a moving direction of the optical pickup and a structure of the tray 100 of the existing optical disk drive.

Referring to Figure 3, the card type optical disk 120 has a data recording surface with a predetermined width, formed centering on a central axis thereof. Here, the card type optical disk 120 has a width "W" which is determined such that the card type optical disk 120 can be properly mounted on to the supporting surface G of the tray 100. Further, the card type optical disk 120 has a length "L" which is given by a distance by which the optical pickup is capable of travelling along the moving axis Y in picking up data from a circular optical disk with the diameter of 12cm. In addition, the length of the data recording surface formed around the central axis of the card type optical disk 120 can be the same as the vertical length "L" of the card type optical disk 120, and a width of the data recording surface itself has a value determined such that the optical pickup can pick up the data, by moving along the moving axis Y. Accordingly, when the card type optical disk 120 is mounted on the supporting surface G, a central axis of the data recording surface is arranged to coincide with the moving axis Y of the optical pickup.

Referring to Figure 4, to play the card type optical disk 120, the user ejects the tray 100 from the optical disk drive and places the card type optical disk 120 on the supporting surface G formed on the upper surface of the tray 100. Then, the card type optical disk 120 is mounted on the tray 100, as illustrated in Figure 4. After placing the card type optical disk 120 on the tray 100, the user loads the tray 100 into the optical disk drive and inputs a command for playing the card type optical disk 120. Then, a controller of the optical disk drive moves the optical pickup along the moving axis Y to pick up the data written on the data recording surface. As a result, the user can obtain information recorded on the data recording surface of the card type optical disk 120.

As described above, optical disk drives according to embodiments of the present invention are able to play card type optical disks which are smaller in size than the conventional circular optical disks, so that a user may record a small amount of information in such low recording capacity card type optical disks, rather than on the conventional circular optical disks of an unnecessarily high recording capacity. In addition, compared with circular optical disks, a card type optical disk is convenient for a user to carry and take in custody because of its small size. Furthermore, it is not necessary for the optical disk drive to drive the spindle motor in reading information recorded in the card type optical disk, thus avoiding the generation of at least some sources of noise.

While there have been illustrated and described what are considered to be preferred embodiments of the present invention, it will be understood by those skilled in the art that various changes and modifications may be made, and equivalents may be substituted for elements thereof without departing from the true scope of the present invention. Therefore, it is intended that the present invention not be limited to the particular embodiment disclosed as the best mode contemplated for carrying out the present invention, but that the present invention includes all embodiments falling within the scope of the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disk drive capable of playing a card type optical disk, the disk drive comprising:
an optical pickup for reading information recorded on an optical disk, by travelling along a reading axis; and
a tray (100) having at least a first supporting surface (E) for supporting circular optical disks of a first type and diameter, and a further supporting surface (G) for supporting a card type optical disk (120), the further supporting surface (G) being formed such that a data recording surface of such a card type optical disk (120) placed thereon has that data recording surface centered on the reading axis (Y) of the optical pickup.

2. An optical disk drive according to claim 1, wherein the tray (100) is further capable of receiving circular optical disks of a second type diameter, different to and less than the first diameter.

3. An optical disk drive according to claim 2, wherein the further supporting surface is dimensioned to receive a card type optical disk (120) having a width (W), a length (L) equal to a distance by which the optical pickup is able to travel to pick up data from the first type of circular optical disk having the first diameter greater than the second diameter by travelling along the reading axis (Y), and the further supporting surface (G) is aligned on the tray (100) such that a card type optical disk (120) mounted thereon has a data recording surface with a predetermined width (D) which has a centre line arranged to be aligned, in use, with the reading axis (Y) of the pick-up.

4. An optical disk drive according to claim 3, wherein the data recording surface of the card type optical disk (120) is centred along a central axis of the card type disk (120).

5. An optical disk drive according to any of the preceding claims, wherein said further supporting surface (G) is offset to one side of the first supporting surface (E) such that the recording surface of a card type optical disk (120) supported thereon, extends substantially no further than a travelling length (C) of the optical pickup.

6. An optical disk drive according to any of the preceding claims, wherein the length of the data recording surface of a card type optical disk (120) corresponds to the maximum distance (C) by which the optical pick-up is able to travel along said reading axis (Y) during a reading or recording operation.

7. An optical disk drive capable of playing a card type optical disk, comprising:
an optical pickup for reading information recorded on an optical disk, moving in a horizontal direction along a moving axis (Y);
a tray (100) having first (E) and second (F) supporting surfaces for supporting circular optical disks having first and second diameters, respectively, and a third supporting surface (G) for supporting a card type optical disk (120), formed at either side of the tray (100), centering on the moving axis (Y) of the optical pickup; and
said card type optical disk (120) having a horizontal length (W) determined such that the card type optical disk can be mounted on the third supporting surface (G), a vertical length (L) equal to a distance (C) where the optical pickup picks up data from the first circular optical disk having the first diameter greater than the second diameter, moving along the moving axis (Y), and a data recording surface with a predetermined width (D), formed centering on a central axis of the card type optical disk.
